# FASCICULE DE BREVET EUROPEEN

(11) **EP 2 382 113 B1**
(45) Date de publication et mention de la délivrance du brevet: **03.07.2013**
(21) Numéro de dépôt: 10707325.6
(22) Date de dépôt: 20.01.2010
(51) Int. Cl.: B60R 21/34, B62D 25/08, B62D 25/10

(54) **VEHICULE AUTOMOBILE COMPORTANT UN PARE CHOC AVANT QUI PRESENTE UNE PARTIE CENTRALE S'ETENDANT JUSQU'AU CAPOT DUDIT VEHICULE**
KRAFTFAHRZEUG MIT EINEM FRONTDÄMPER MIT MITTELTEIL DER SO WEIT REICHT WIE DIE HAUBE DIESES KRAFTFAHRZEUGS
AUTOMOBILE COMPRISING A FRONT BUMPER WITH A CENTRAL PORTION EXTENDING AS FAR AS THE BONNET OF SAID VEHICLE

(30) Priorité: 23.01.2009 FR 0900305
(43) Date de publication de la demande: 02.11.2011
(73) Titulaire: Renault s.a.s., 78288 Guyancourt Cedex (FR)
(72) Inventeur: CHALLAL, Hicham, F-78000 Versailles (FR); VEUILLOT, Olivier, F-94450 Limeil Brevannes (FR)
(86) Numéro de dépôt international: PCT/FR2010/050084
(87) Numéro de publication internationale: WO 2010/084284

(56) Documents cités:
- EP-A- 1 561 647
- WO-A-2005/120908
- DE-U1- 20 321 022
- FR-A- 2 910 870

## Description

La plupart des véhicules automobiles comporte un capot dans lequel est ménagée la grille d'entrée d'air supérieure. Cette grille d'air est en général disposée entre les projecteurs avant. Le pare-choc est disposé sous la grille d'entrée d'air précitée. Lors d'un choc frontal avec un piéton de petite taille, comme par exemple un enfant, la tête du piéton vient heurter le capot, sensiblement, au-dessus de la grille d'entrée d'air supérieure. La souplesse naturelle du capot, fait de tôle d'acier, permet d'amortir le choc, par déformation du capot.

Or, depuis quelques années, pour des raisons de style, les véhicules automobiles comportent des pare-chocs avant qui sont très volumineux. Ces pare-chocs comportent une partie centrale qui remonte vers le capot, entre les projecteurs avant. C'est souvent cette partie du pare-choc qui porte la grille d'entrée d'air supérieure. Le capot est, lui, raccourci et son bord libre est situé assez haut entre les projecteurs. En cas de choc frontal avec un piéton de petite taille, la tête du piéton vient heurter, non plus le capot, mais la partie centrale du pare-choc. Les pare-chocs de ce type sont constitués de plusieurs pièces qui, pour des raisons fonctionnelles, sont très rigides. De tels pare-chocs peuvent donc occasionner des blessures graves à un piéton, notamment à la tête d'un piéton de petite taille. Le document EP 1561647 A1 décrit un véhicule automobile selon le préambule de la revendication 1.

Un but de la présente invention est de proposer un véhicule automobiles qui comporte un pare choc tel que précité et qui réduit les risques de blessures graves lors d'une collision avec un piéton, notamment, un piéton de petite taille.

Dans le but de résoudre ce problème, la présente invention propose un véhicule automobile comportant, de manière connue :
- une structure qui comporte une traverse avant et qui définit, en arrière de ladite traverse avant, un compartiment moteur ;
- un élément de fixation, solidaire de ladite structure et disposé dans ledit compartiment moteur;
- un capot qui ferme ledit compartiment moteur et qui présente un bord libre sensiblement parallèle à ladite traverse ;
- un pare-choc avant, monté devant ladite traverse avant et qui présente une partie centrale qui s'étend vers ledit capot, ladite partie centrale présentant une portion supérieure délimitée par un bord haut qui vient en regard dudit bord libre du capot, ladite portion supérieure comportant une patte de fixation qui s'étend dans ledit compartiment moteur et qui comporte une zone d'attache fixée audit élément de fixation.

Selon l'invention, de manière caractéristique, ladite patte de fixation comporte une zone frangible, située en avant de ladite zone d'attache, et qui est apte à se rompre lorsqu'une force supérieure à une valeur de rupture donnée est exercée sur ladite zone frangible et ladite zone frangible est disposée au niveau d'un espace vide, ménagé dans ledit compartiment, moyennant quoi, lorsque ladite zone frangible se rompt, la partie centrale dudit pare-choc fléchit dans ledit espace vide.

Un tel véhicule permet de dissiper une partie de l'énergie cinétique du choc dans la rupture de la zone frangible et la déformation de la patte de fixation. De plus, la Demanderesse a mis en évidence qu'une telle structure permet également de réduire les efforts de contact (c'est-à-dire la force exercée par la zone du véhicule, qui est en contact avec le corps du piéton, sur le corps du piéton ; cette force étant engendrée par le mouvement du véhicule pendant le choc) qui sont réduits et permettent d'éviter des traumatismes graves. Un tel véhicule s'avère donc particulièrement avantageux pour réduire les risques de traumatismes crâniens, lors d'un choc avec un piéton de petite taille, dont la tête est susceptible de heurter le pare-choc du véhicule.

Selon un mode de réalisation, la partie centrale comporte une armature recouverte d'une peau et ladite armature porte ladite patte de fixation. La peau peut être constituée d'un matériau relativement souple, tandis que l'armature est rigide.

La patte de fixation peut s'étendre sur toute la largeur de ladite partie centrale afin de procurer une fixation optimale de cette dernière.

La zone frangible peut être formée par un matériau particulier, la présence de perforations ou autre qui fragilise la patte de fixation. Elle peut être obtenue par tout moyen apte à fragiliser le matériau de la patte de fixation à un endroit donné. Selon un mode de réalisation, la zone frangible est formée par une réduction d'épaisseur de ladite patte de fixation.

Selon l'invention ladite zone frangible est disposée à proximité dudit bord libre dudit capot, ce qui permet une bonne déformation, à la fois du capot et de la patte de fixation, la tête ou autre partie du corps du piéton pouvant, en effet, entrer dans le compartiment moteur, au niveau de l'espace vide ménagé à l'arrière du pare-choc, sans heurter d'élément rigide qui pourrait être blessant.

L'espace vide correspond, selon l'invention, sensiblement à l'espace séparant la face interne dudit pare choc avant dudit élément de fixation.

La profondeur dudit espace vide est, par exemple, comprise entre 50 mm et 100 mm.

Selon un mode de réalisation particulier, ladite partie centrale comporte une grille d'entrée d'air.

D'autres particularités et avantages de l'invention ressortiront à la lecture de la description, faite ci-après, d'un mode de réalisation particulier de l'invention, donné à titre indicatif mais non limitatif, en référence aux dessins annexés sur lesquels :
- la Figure 1 représente une vue en perspective du véhicule selon l'invention ;
- la Figure 2 représente une vue en coupe longitudinale de l'avant du véhicule de la Figure 1 ;
- la Figure 3 représente une vue partielle, en coupe longitudinale, du mode de réalisation du pare-choc avant représenté sur les Figures 1, 2 et 4 ; et
- la Figure 4 représente une vue en coupe longitudinale de l'avant du véhicule de la Figure 1, lors d'un choc avec un piéton de petite taille.

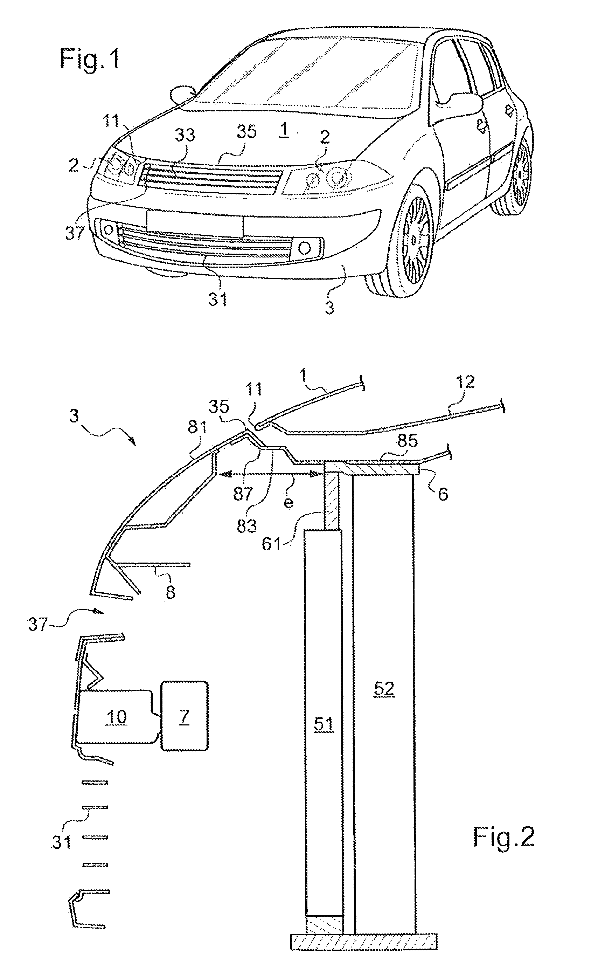

La Figure 1 illustre un mode de réalisation particulier d'un véhicule selon l'invention. Ce véhicule comporte un compartiment moteur fermé par un capot 1, sensiblement horizontal. Le capot 1 est articulé au niveau du pare-brise et présente un bord libre 11, situé à l'avant du véhicule. Le véhicule comporte de chaque côté, un projecteur avant 2, disposé sensiblement en dessous du capot 1. Le véhicule est équipé, à l'avant, d'un pare-choc ou bouclier 3. Ce bouclier 3 comporte dans sa partie basse, une grille inférieure d'entrée d'air 31. Le bouclier 3 s'étend latéralement au véhicule, sous les projecteurs 2. Le bouclier 3 présente, également, une partie centrale 33 qui s'étend entre les projecteurs avant 2 du véhicule, vers le bord libre 11 du capot 1. Les projecteurs 2 sont ainsi partiellement entourés par le bouclier 3. La partie centrale 33 du bouclier 3 présente une portion supérieure, disposée entre les projecteurs 2 et qui se termine au niveau d'un bord haut 35, parallèle au bord libre 11 du capot 1. Le bord libre 11 du capot 1 est disposé à proximité du bord haut 35 du bouclier 3 pour former une surface continue. Une grille supérieure 37 d'entrée d'air est ménagée entre les projecteurs 2, dans la partie centrale 33.

En référence à la Figure 2, le véhicule comporte un compartiment moteur dans lequel sont fixés les radiateurs 51 et 52. Les radiateurs 51 et 52 sont fixés, l'un devant l'autre, sur un support de radiateur 6 qui est lui-même fixé aux longerons (non représentés) de la structure du véhicule. Le support 6 s'étend au-dessus et en dessous des radiateurs 51 et 52. Le radiateur 51, qui est disposé le plus en avant dans le compartiment moteur, étant moins haut que l'autre, le support 6 comporte une entretoise 61, verticale qui sert à la fixation de la portion haute du radiateur 51. Les extrémités avant des longerons (non représentés) sont reliées par une traverse avant 7. Le bouclier 3 comporte une armature 8, en plastique rigide. Cette armature 8 est recouverte d'une peau 81, en plastique souple, située à l'extérieur du véhicule. Un élément absorbeur de choc 10 est disposé devant la traverse avant 7. Cet élément absorbeur de choc s'étend sur toute la longueur de la traverse 7. La grille d'entrée d'air inférieure 31 est disposée sous la traverse 7 tandis que la grille d'entrée d'air supérieure 37 est disposée au-dessus de la traverse 7.

Comme représenté sur la Figure 2, le bouclier 3 comporte une patte de fixation 83 qui fait partie intégrante de l'armature 8 et qui prolonge le bord haut 35 du bouclier. Cette patte de fixation 83 s'étend dans le compartiment moteur, vers le support radiateur 6. La patte de fixation 83 présente une portion d'attache 85, sensiblement horizontale, située en avant de son extrémité libre. La patte de fixation 83 s'étend transversalement au bouclier 3, sur toute la largeur de la portion de l'armature 8 située au niveau de la partie centrale 33 du bouclier 3. La fixation de la portion d'attache 85 de la patte de fixation 83 n'est pas limitative de l'invention. La patte de fixation 83 peut être vissée ou rivetée sur le support radiateur 6. La patte de fixation 83 comporte une zone frangible 87, qui est disposée à proximité du bord haut 35 du bouclier 3, au niveau du bord de la peau 81. Le capot 1 comporte une doublure 12, située dans le compartiment moteur. Le capot 1 est donc creux ce qui lui confère une certaine souplesse.

Comme représenté sur la Figure 2, un espace vide est ménagé sous la patte de fixation 83. La patte de fixation 83 et la portion supérieure de la partie centrale 33 du bouclier 3, en particulier le bord haut 35, peuvent ainsi, lors de la rupture de la zone frangible, comme ultérieurement expliqué, se courber dans le compartiment moteur sans venir heurter un élément rigide tel que le radiateur 51, qui gênerait leur déformation et pourrait causer des traumatismes au piéton heurté. Les dimensions de cet espace vide sont fonction de la taille de la patte de fixation 83 et du matériau utilisé pour l'armature 8.

A titre indicatif, l'espace vide peut présenter une profondeur e, mesurée selon la dimension longitudinale du véhicule, de l'ordre de 50 à 100 mm, et par exemple, de l'ordre de 80 mm. La profondeur e de l'espace vide, correspond à la distance séparant la face interne de l'armature 8 au support radiateur 6, et plus particulièrement à l'entretoise 61 de ce support 6.

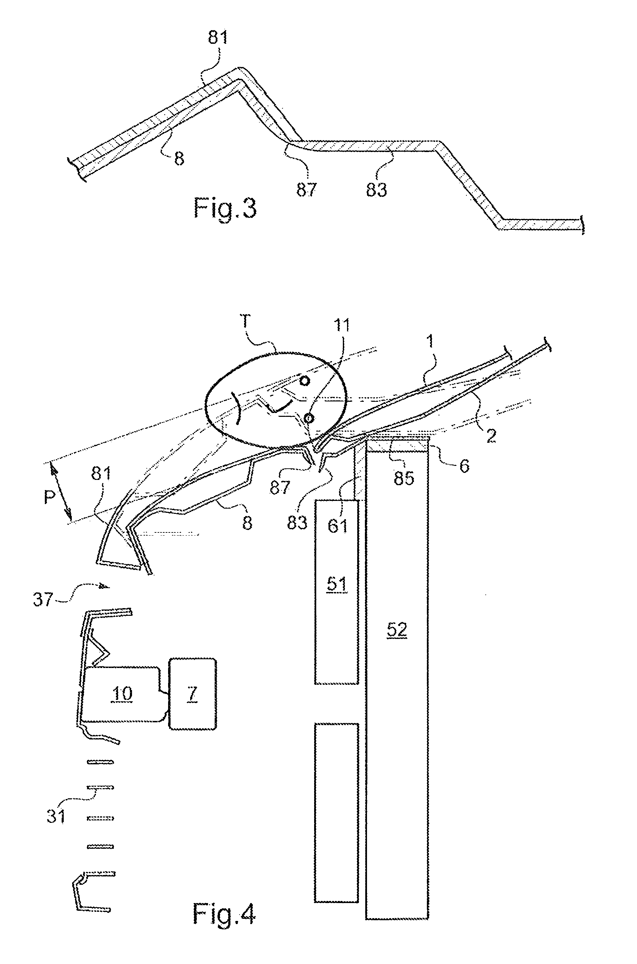

La Figure 3 représente plus en détail la zone frangible 87.

La zone frangible 87 correspond à une ligne de diminution de l'épaisseur de l'armature 8. Cette ligne s'étend sur toute la largeur de la patte de fixation 83. La zone frangible 87 est disposée sous la peau 81, sensiblement au niveau du bord de cette dernière qui est situé dans le compartiment moteur. La patte de fixation 83 correspond à la portion de l'armature 8 qui dépasse de la peau 81 et qui s'étend dans le compartiment moteur, vers les radiateurs 51 et 52. La peau 81 recouvre l'armature 8 au niveau de la face externe du bouclier 3 et pénètre, sur une petite longueur, dans le compartiment moteur, au niveau du bord haut 35, sous le capot 1. La zone frangible 87 correspond donc au bord de la patte de fixation 83 qui est lié à l'armature 8. La zone frangible forme une ligne ou une bande, parallèle au bord libre 11 du capot 1 et se situe à proximité de ce bord libre 11. L'effet de cette disposition sera plus amplement expliqué en référence à la Figure 4.

La peau 81 est constituée de matière plastique souple. L'armature 8 est formée d'une matière plastique plus cassante et plus rigide. Par exemple, on peut choisir un matériau plastique qui se rompt, lorsque son élongation est de l'ordre de 5 à 10%.

Le fonctionnement de l'invention va maintenant être expliqué en référence à la Figure 4.

Sur la Figure 4, les lignes en pointillés représentent la position du capot 1 et de la partie centrale 33 du bouclier 3, avant le choc avec un piéton.

Lorsque la tête T d'un piéton de petite taille vient heurter la portion supérieure de la partie centrale 33 du bouclier 3, la zone frangible 87 se rompt, sur toute la largeur de la patte de fixation 83, c'est-à-dire sur toute la largeur de la partie centrale 33 du bouclier 3. La partie centrale 33 du bouclier 3 n'est donc plus fixée au véhicule, en particulier au support 6. Elle se plie, notamment au niveau de sa portion supérieure, fléchit dans le compartiment moteur, vers le bas du véhicule. Le bord haut 35 entre dans le compartiment moteur, en avant et au-dessus du radiateur 51, qui est le plus en avant dans le compartiment moteur. Dans le même temps, le choc avec la tête T du piéton entraîne la déformation du capot 1. Le bord libre 11 du capot 1 entre dans le compartiment moteur et se courbe sensiblement vers les radiateurs 51 et 52. La zone frangible 87 étant disposée à proximité du bord libre 11 du capot 1, elle est directement soumise au choc avec la tête du piéton et se brise rapidement. Par ailleurs, cette disposition permet de créer deux lèvres, une formée par le bord haut 35, l'autre par le bord libre 11 du capot 1, qui s'ouvrent sous le choc, dans le compartiment moteur, au niveau de l'espace vide ménagé sous la patte de fixation 83. Ceci permet de protéger efficacement la tête du piéton heurté.

Comme représenté sur la Figure 4, lorsque la déformation est maximale, la doublure 12 du capot 1 vient au contact du support radiateur 6, au-dessus du radiateur 52. La patte de fixation conserve sa zone d'attache 87, fixée sur le support radiateur 6. La portion de la patte de fixation 83 située en avant de la zone d'attache, se courbe vers le radiateur 51.

A titre indicatif, la déformation du bouclier 3 et du capot 1 entraîne un déplacement du bord haut 35 et du bord libre 11 d'une amplitude maximale P de l'ordre de 10mm.

Lors du choc avec un piéton, l'énergie cinétique du choc est dissipée, en partie dans la rupture de la zone frangible 87, et en partie dans la déformation, à la fois du capot 1 et de la partie centrale 33 du bouclier 3. D'autre part, lorsque la tête T du piéton est, comme représenté sur la Figure 4, en appui sur le bord haut 35 du bouclier 3 et sur le bord libre 11 du capot 1, des efforts de contact s'exercent sur la tête T du piéton, durant tout le laps de temps pendant lequel le véhicule est encore en mouvement et que la tête T reste en contact avec les éléments précités du véhicule. La Demanderesse a constaté que, non seulement l'énergie cinétique du choc est efficacement dissipée, comme précédemment expliqué, mais aussi que les efforts de contact, durant le choc, peuvent être réduits à une valeur inférieure à 200 kg, ce qui correspond à la limite admissible pour une boite crânienne. La partie centrale 33 du bouclier 3 de l'invention présente une dureté suffisante pour une utilisation normale du bouclier (c'est-à-dire pour protéger la structure du véhicule) et, du fait de la présence de la zone frangible 87, elle présente, également, une souplesse suffisante pour ne pas occasionner de sérieux traumatismes à la tête d'un piéton de petite taille.

## Revendications

1. Véhicule automobile comportant :
- une structure qui comporte une traverse avant (7) et qui définit, en arrière de ladite traverse avant (7), un compartiment moteur ;
- un élément de fixation (6), solidaire de ladite structure et disposé dans ledit compartiment moteur ;
- un capot (1) qui ferme ledit compartiment moteur et qui présente un bord libre (11), sensiblement parallèle à ladite traverse avant (7) ; et
- un pare-choc avant (3), monté devant ladite traverse avant (7) et qui présente une partie centrale (33) qui s'étend vers ledit capot (1), ladite partie centrale (33) présentant une portion supérieure délimitée par un bord haut (35) qui vient en regard dudit bord libre (11) du capot (1), ladite portion supérieure comportant une patte de fixation (83) qui s'étend dans ledit compartiment moteur et qui comporte une zone d'attache (85) fixée audit élément de fixation (6) ;
ladite patte de fixation (83) comportant une zone frangible (87) qui est apte à se rompre lorsqu'une force supérieure à une valeur de rupture donnée est exercée sur ladite zone frangible (87) **caractérisé en ce qu'**un espace vide qui correspond sensiblement à l'espace séparant, selon la dimension longitudinale du véhicule, la face interne dudit pare choc avant (3) dudit élément de fixation (6) est ménagé, dans le compartiment moteur, sous ladite patte de fixation (83) en ce que ladite zone frangible (87) est disposée en avant de la zone d'attache (85), au niveau dudit espace vide, à proximité dudit bord libre (11) dudit capot (1), moyennant quoi, lorsque ladite zone frangible (87) se rompt, la partie centrale (33) dudit pare-choc (3) fléchit dans ledit espace vide vers le bas dudit véhicule.

2. Véhicule selon la revendication 1, **caractérisé en ce que** ladite partie centrale (33) comporte une armature (8) recouverte d'une peau (81) et **en ce que** ladite armature (8) porte ladite patte de fixation (83).

3. Véhicule selon la revendication 1 ou 2, **caractérisé en ce que** ladite patte de fixation (83) s'étend sur toute la largeur de ladite partie centrale (33).

4. Véhicule automobile selon l'une quelconque des revendications précédentes, **caractérisé en ce que** ladite zone frangible (87) est formée par une réduction d'épaisseur de ladite patte de fixation (83).

5. Véhicule selon l'une quelconque des revendications précédentes, **caractérisé en ce que** la profondeur (e) dudit espace vide est comprise entre 50 mm et 100 mm.

6. Véhicule automobile selon l'une quelconque des revendications précédentes, **caractérisé en ce que** ladite partie centrale (33) comporte une grille d'entrée d'air (37).

## Patentansprüche

1. Kraftfahrzeug, das aufweist:
- eine Struktur, die einen vorderen Querträger (7) aufweist und hinter dem vorderen Querträger (7) einen Motorraum definiert;
- ein Befestigungselement (6), das fest mit der Struktur verbunden und im Motorraum angeordnet ist;
- eine Haube (1), die den Motorraum verschließt und einen freien Rand (11) im Wesentlichen parallel zum vorderen Querträger (7) aufweist; und
- eine vordere Stoßstange (3), die vor dem vorderen Querträger (7) montiert ist und einen zentralen Bereich (33) aufweist, der sich zur Haube (1) erstreckt, wobei der zentrale Bereich (33) einen von einem oberen Rand (35) begrenzten oberen Teil aufweist, der sich gegenüber den freien Rand (11) der Haube (1) befindet, wobei der obere Teil eine Befestigungslasche (83) aufweist, die sich in den Motorraum erstreckt und eine Verbindungszone (85) aufweist, die am Befestigungselement (6) befestigt ist;
wobei die Befestigungslasche (83) eine zerbrechliche Zone (87) aufweist, die reißen kann, wenn eine Kraft größer als ein gegebener Reißwert auf die zerbrechliche Zone (87) ausgeübt wird, **dadurch gekennzeichnet, dass** ein Leerraum, der im Wesentlichen dem Raum entspricht, der gemäß der Längsabmessung des Fahrzeugs die Innenseite der vorderen Stoßstange (3) vom Befestigungselement (6) trennt, im Motorraum unter der Befestigungslasche (83) ausgespart ist, dass die zerbrechliche Zone (87) vor der Verbindungszone (85) im Bereich des Leerraums in der Nähe des freien Rands (11) der Haube (1) angeordnet ist, wodurch, wenn die zerbrechliche Zone (87) reißt, der zentrale Bereich (33) der Stoßstange (3) sich in den Leerraum zur Unterseite des Fahrzeugs durchbiegt.

2. Fahrzeug nach Anspruch 1, **dadurch gekennzeichnet, dass** der zentrale Bereich (33) einen Rahmen (8) aufweist, der mit einer Schale (81) bedeckt ist, und dass der Rahmen (8) die Befestigungslasche (83) trägt.

3. Fahrzeug nach Anspruch 1 oder 2, **dadurch gekennzeichnet, dass** die Befestigungslasche (83) sich über die ganze Breite des zentralen Bereichs (33) erstreckt.

4. Kraftfahrzeug nach einem der vorhergehenden Ansprüche, **dadurch gekennzeichnet, dass** die zerbrechliche Zone (87) von einer Dickenverringerung der Befestigungslasche (83) geformt wird.

5. Fahrzeug nach einem der vorhergehenden Ansprüche, **dadurch gekennzeichnet, dass** die Tiefe (e) des Leerraums zwischen 50 mm und 100 mm liegt.

6. Kraftfahrzeug nach einem der vorhergehenden Ansprüche, **dadurch gekennzeichnet, dass** der zentrale Bereich (33) ein Lufteintrittsgitter (37) aufweist.

## Claims

1. Motor vehicle comprising:
- a structure which comprises a front crossmember (7) and which defines, behind said front crossmember (7), an engine compartment;
- a fixing element (6), secured to said structure and arranged in said engine compartment;
- a bonnet or hood (1) which closes said engine compartment and has a free edge (11) substantially parallel to said front crossmember (7); and
- a front bumper or fender (3) mounted in front of said front crossmember (7) and which has a central part (33) extending toward said bonnet (1), said central part (33) having an upper portion delimited by a top edge (35) which faces said free edge (11) of the bonnet (1), said upper portion comprising a fixing tab (83) which extends into said engine compartment and comprises an attachment region (85) fixed to said fixing element (6);
said fixing tab (83) comprising a frangible region (87) which is able to break when a force exceeding a given rupture value is applied to said frangible region (87), **characterized in that** an empty space which corresponds substantially to the space which, in the longitudinal dimension of the vehicle, separates the internal face of said front bumper (3) from said fixing element (6), is formed, in the engine compartment, under said fixing tab (83), and **in that** said frangible region (87) is arranged in front of the attachment region (85) in the region of said empty space, near said free edge (11) of said bonnet (1), by means of which contrivance, when said frangible region (87) breaks, the central part (33) of said bumper (3) flexes into said empty space toward the bottom of said vehicle.

2. Vehicle according to Claim 1, **characterized in that** said central part (33) comprises a reinforcement (8) covered with a skin (81), and **in that** said reinforcement (8) bears said fixing tab (83).

3. Vehicle according to Claim 1 or 2, **characterized in that** said fixing tab (83) extends over the entire width of said central part (33).

4. Motor vehicle according to any one of the preceding claims, **characterized in that** said frangible region (87) is formed of a reduction in thickness of said fixing tab (83).

5. Vehicle according to any one of the preceding claims, **characterized in that** the depth (e) of said empty space is comprised between 50 mm and 100 mm.

6. Motor vehicle according to any one of the preceding claims, **characterized in that** said central part (33) comprises an air inlet grille (37).
